# EUROPÄISCHE PATENTSCHRIFT

(11) **EP 2 650 696 B1**
(45) Veröffentlichungstag und Bekanntmachung des Hinweises auf die Patenterteilung: **21.01.2015**
(21) Anmeldenummer: 13160515.6
(22) Anmeldetag: 21.03.2013
(51) Int. Cl.: G01S 13/92, G01S 7/41, G01S 13/91, G08G 1/052

(54) **Verfahren und Vorrichtung zur Radar-Verkehrserfassung**
Method and device for radar traffic detection
Procédé et dispositif pour le recensement de la circulation

(30) Priorität: 26.03.2012 AT 500982012
(43) Veröffentlichungstag der Anmeldung: 16.10.2013
(73) Patentinhaber: Sierzega Elektronik GmbH, 4062 Thening (AT)
(72) Erfinder: Sierzega, Robert, 4062 Thening (AT)

(56) Entgegenhaltungen:
- EP-A2- 0 497 093
- US-A1- 2010 292 886

## Beschreibung

### Erfindungsgebiet

Die vorliegende Erfindung betrifft ein Verfahren zur Verkehrserfassung, bei dem bei der Durchfahrt eines Fahrzeuges durch einen schräg zur Fahrtrichtung gerichteten Radarstrahl Daten wie Richtung, Geschwindigkeit, Fahrzeuglänge, Sicherheitsabstand zum vorausfahrenden Fahrzeug und Fahrzeugart bzw. Fahrzeugklasse erhoben werden, sowie eine Vorrichtung zur Durchführung des Verfahrens.

### Stand der Technik

Doppler-Radargeräte werden zur Erfassung von Verkehrsdaten häufig bevorzugt, da sowohl ein stationärer wie auch ein mobiler Einsatz mit überschaubarem Aufwand möglich ist und die Detektion von außerhalb der Straße erfolgt. Patentschrift DE3810357A1 beschreibt ein derartiges Verfahren bzw. eine Vorrichtung.

Dabei werden meist Radarantennen mit spezieller Richtcharakteristik verwendet. Der Radarstrahl wird vom Straßenrand oder von oberhalb der Straße aus schräg zur Fahrtrichtung der Fahrzeuge über die Fahrbahn gerichtet. Bei Montagen am Straßenrand sind Antennen mit einer Halbwertsbreite von meist rund 12 ° in horizontaler Ebene und rund 30 ° in vertikaler Ebene üblich. Bei einem Messwinkel von 30 ° bis 45 ° zur Fahrtrichtung oder Straßenachse, ist eine ausreichende Trennung der hintereinanderfahrenden Fahrzeuge möglich. Durch die Dopplersignale kann die Richtung, Geschwindigkeit und Länge der Fahrzeuge einfach ermittelt werden.

Für eine exakte Erfassung der Geschwindigkeit ist mit besonderer Sorgfalt auf die korrekte Ausrichtung des Radarsensors zur Fahrtrichtung zu achten. Ein Doppler-Radargerät kann nur genau in Bewegungsrichtung die tatsächliche Geschwindigkeit eines bewegten Objektes erfassen. Durch den notwendigen Messwinkel für die präzise Trennung und Einzelerfassung der Fahrzeuge ist bei der Verkehrsdatenerfassung der genannte Messwinkel von 30°bis 45° üblich. Daraus ergibt sich, dass die Messwerte entsprechend dem Messwinkel mittels der

Winkelfunktionen korrigiert werden müssen. Somit muss nach der Montage am Radargerät der tatsächliche Winkel zur Korrektur der Messwerte manuell eingestellt werden, oder wie meist üblich, das Gerät exakt in einem vorgegebenen Messwinkel aufgestellt werden. Dazu gibt es unterschiedliche Hilfsmittel und Ausrichteverfahren.

Um die Montage der beschriebenen Verkehrserfassungsgeräte zu beschleunigen und zu vereinfachen, wenn möglich auch die Genauigkeit zu verbessern, wurden Wege zur Automatisierung der Ausrichtung entwickelt. Anmeldung DE102010010656A1 beschreibt ein Verfahren und eine Einrichtung dazu. Ein am Messgerät vorbeifahrendes Fahrzeug wird dabei zweimal erfasst. Einmal von einem Radarsensor in der Annäherung und einmal von einem Sensor, nachdem das Fahrzeug das Erfassungsgerät passiert hat, in abgehender Richtung. Vorausgesetzt die Montage hat ohne Berücksichtigung einer genauen Ausrichtung der Radarantennen zur Fahrbahnachse stattgefunden, so kann durch das Verhältnis der beiden Messwerte und die Annahme, dass das Fahrzeug seine Geschwindigkeit nicht verändert hat, auf die tatsächliche Geschwindigkeit und Länge des Fahrzeuges und den Messwinkel der beiden Radarsensoren zur Fahrbahnachse geschlossen werden.

Nachteil dieses Verfahrens ist jedoch in erster Linie die Voraussetzung, dass die Fahrzeuge die Geschwindigkeit im Messbereich nicht verändern dürfen, damit eine zuverlässige Messwinkelbestimmung möglich ist. Andernfalls ist das Verhältnis zweier Messwerte mit unterschiedlichen Messrichtungen hauptsächlich von der Beschleunigung oder Verzögerung der Fahrgeschwindigkeit abhängig. Zusätzlich unterliegen zwei unabhängige Messwerte mit relativ hohem Messwinkel einer gewissen Toleranz, was die Messwinkelbestimmung daraus noch erschwert.

Die Verwendung mehrerer Radarsensoren in einer Messanordnung ist jedoch auch in anderen Anwendungen von Bedeutung. Häufig werden mehrere Sensoren zur räumlichen Messbereichserweiterung oder zur Erhöhung der Auflösung verwendet, wie in EP0497093A2. Dabei wird mit zwei Radarantennen ein breiter Fahrbahnbereich abgedeckt und mittels Entfernungs- und Geschwindigkeitstoren versucht, im Nahbereich von Straßenkreuzungen möglichst viele Fahrzeuge zur Steuerung von Verkehrssignalanlagen zu erfassen. In einer anderen Aufgabe beschreibt Anmeldung US2012188115 A1 die Verwendung zweier Radarsensoren, die in der gewählten Anordnung die Zuordnung von Geschwindigkeitswerten zum jeweiligen Fahrzeug ermöglichen. Fahrzeuge werden in größerer Entfernung erfasst und die Geschwindigkeit gemessen, jedoch erfolgt die Zuordnung der Messwerte zum jeweiligen Fahrzeug erst im Nahbereich durch einen weiteren Radarsensor. Die beschriebene Aufgabe könnte auch durch einen Radarsensor mit breiterer Antennenöffnung in gleicher Weise durch Verfolgung der Messwerte erfüllt werden, jedoch können mehrere Sensoren bei gleicher Sendeleistung den Messbereich verlängern, da die Fahrzeuge bereits in größerer Entfernung detektiert werden.

### Offenbarung der Erfindung

Aufgabe der vorliegenden Erfindung ist es, ein Verfahren und eine Vorrichtung zur Radar-Verkehrserfassung zu schaffen, das nach der Montage eines erfindungsgemäßen Gerätes und einer groben manuellen Ausrichtung automatisch den Messwinkel der Radarsensoren zur Fahrtrichtung von ankommenden und abgehenden Fahrzeugen zuverlässig und exakt zu bestimmen gestattet und somit die manuelle Feinjustierung der Geräte oder Eingabe eines manuell ermittelten Messwinkels erübrigt und damit die Verkehrserfassung und speziell die Qualität der erhobenen Daten verbessert und durch die Automatisierung den Ablauf der Montage vereinfacht und beschleunigt.

Die erfindungsgemäße Lösung der Aufgabe ist im Patentanspruch 1 beschrieben. In den übrigen Ansprüchen sind vorteilhafte Aus- und Weiterbildungen des erfindungsgemäßen Verfahrens (Ansprüche 2 - 4) bzw. der bevorzugten Vorrichtung zum Ausführen des Verfahrens (Ansprüche 5 - 6) beschrieben.

Im folgenden wird die Erfindung anhand der beiliegenden Zeichnungen beispielsweise erläutert. Dabei zeigt:
- Fig. 1 eine Prinzipskizze mit Messanordnung eines Radar-Verkehrserfassungsgerätes 7a neben der Fahrbahn
- Fig. 2 eine Prinzipskizze mit Messanordnung eines Radar-Verkehrserfassungsgerätes 7b oberhalb der Fahrbahn

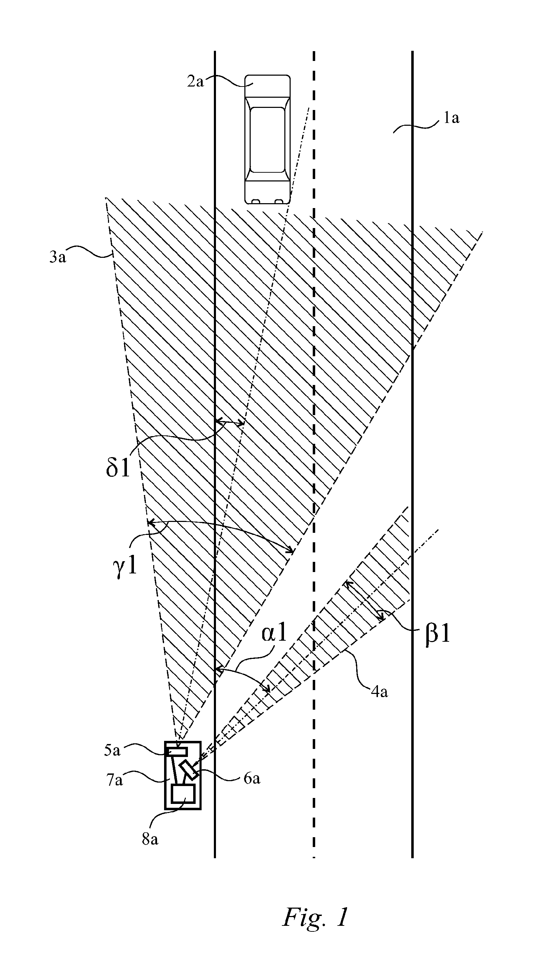

Gegenüber dem beschriebenen Stand der Technik wird in Fig. 1 bei einem Radar-Verkehrserfassungsgerät 7a, mit Auswerteeinheit 8a und Radarsensor 6a, bereits ein zusätzlicher Radarsensor 5a dargestellt, der ebenso wie der erstgenannte Radarsensor 6a mit der Auswerteeinheit 8a verbunden ist.

Das Radar-Verkehrserfassungsgerät 7a befindet sich beispielsweise neben einer zweispurigen Straße 1a mit jeweils einer Richtungsfahrbahn. Das Radar-Verkehrserfassungsgerät 7a wird üblicherweise in rund einem Meter Höhe über dem Boden an einem Mast montiert, oder in eine vorhandene Einrichtung am Straßenrand integriert, wie zum Beispiel in einen Leitpfosten. Die erfindungsgemäße Einrichtung befindet sich üblicherweise rund einen Meter vom Fahrbahnrand entfernt.

In Fig. 1 ist als Beispiel Rechtsverkehr dargestellt, wobei jedoch das erfindungsgemäße Verfahren und die Einrichtung auch bei Linksverkehr gleichermaßen verwendet werden kann. Sollte der Straßenverlauf oder die Position neben der Fahrbahn dies erfordern, so kann das erfindungsgemäße Verfahren und die Einrichtung auch normal zur Fahrbahnachse gespiegelt betrieben werden. Dabei messen die Radarkeulen 3a und 4a der beiden Radarsensoren 5a und 6a unter gleichem Messwinkel zur Fahrbahnachse lediglich entgegen der anderen Fahrtrichtung.

Bei der Montage der erfindungsgemäßen Einrichtung ist eine exakte Ausrichtung zur Fahrtrichtung und die Einhaltung eines vorgegebenen Messwinkels α1 nicht erforderlich. Somit kann die erfindungsgemäße Einrichtung bei mobiler Verwendung auch in verdrehsichere vorgefertigte Fundamente gesteckt werden, die wiederum nur sehr schwer in einem exakten Winkel eingebracht werden können.

Nähert sich in der beispielhaften Darstellung in Fig. 1 ein Fahrzeug 2a der Einrichtung, so wird in rund 50 bis 100 Metern Entfernung die Geschwindigkeit von Fahrzeug 2a erstmals gemessen. Bei Radarsensor 5a sind keine besonderen Anforderungen an die Antenne und den entsprechenden Antennenöffnungswinkel γ1 gestellt. Zur Senkung der Herstellungskosten der erfindungsgemäßen Einrichtung kann ein kostengünstiger Sensor mit breitem Antennenöffnungswinkel γ1 verwendet werden. Durch die grobe Ausrichtung der erfindungsgemäßen Einrichtung zur Fahrbahn genügt bei einem mittleren Messwinkel δ1 eine Toleranz von +-15°.

Bei ausreichend weitem Antennenöffnungswinkel γ1 (etwa im Beispiel 30°) wirft nun das Fahrzeug 2a, das sich in die Radarkeule 3a bewegt, die Mikrowellen von Radarsensor 5a zum Radar-Verkehrserfassungsgerät 7a unter sehr niedrigem Messwinkel (meist unter 5°) bereits in größerer Entfernung zum Radarsensor 5a zurück. Auswerteeinheit 8a analysiert die Dopplerfrequenzen und ermittelt die Geschwindigkeit von Fahrzeug 2a.

Fährt Fahrzeug 2a rund einen Meter vom Fahrbahnrand entfernt, so ergibt sich für die Geschwindigkeitsmessung in Radarkeule 3a bei einem seitlichen Versatz von gesamt 2 Metern erst bei einer Entfernung von rund 11,5 Metern ein Messwinkel δ1 von 10°. Selbst dabei ist der Winkeleinfluß auf die Dopplermessung erst rund 1,5%. Dabei ist eben die ermittelte Geschwindigkeit aus der Dopplerfrequenz 1,5% niedriger als die tatsächliche Geschwindigkeit von Fahrzeug 2a.

Die Geschwindigkeit von Fahrzeug 2a wird in der Annäherung verfolgt. Um den Messwinkeleinfluß in niedriger Entfernung zwischen Radar-Verkehrserfassungsgerät 7a und Fahrzeug 2a niedrig zu halten, werden die letzten Geschwindigkeitswerte vor Verlassen der Radarkeule 3a nicht mehr verwendet. Durch eine zusätzliche FSK-Modulation der Radarsignale und die Einbindung einer Entfernungsinformation, lässt sich ein Messwinkelfehler auf jeden Fall minimieren.

Die ermittelten Geschwindigkeiten von Fahrzeug 2a in der Radarkeule 3a dienen für das erfindungsgemäße Verfahren als Referenzgeschwindigkeiten. Zusätzlich kann über die Änderung der Geschwindigkeit auch der weitere Verlauf der Beschleunigung oder Verzögerung mit berücksichtigt werden.

Erreicht Fahrzeug 2a die Radarkeule 4a von Radarsensor 6a, so beginnt die Messung in einem kurzen Straßenabschnitt, den die Antenne von Radarsensor 6a mit kleinem bekannten Antennenöffnungswinkel β1 abdeckt. Bei der Durchfahrt wird wieder in Auswerteeinheit 8a der Geschwindigkeitsverlauf verfolgt und alle Messwerte werden zwischengespeichert.

Nach der Durchfahrt von Fahrzeug 2a durch die Radarkeule 4a wird ein repräsentativer Geschwindigkeitswert für diesen Messbereich ermittelt, ohne die Werte aus den Dopplersignalen einer Winkelkorrektur zu unterziehen. Dieser Wert ist entweder ein einfacher Mittelwert aller Geschwindigkeitsdaten, oder es wird bevorzugt durch eine Entfernungsinformation mittels FSK-Modulation der Radarsignale die Phase der Einfahrt von Fahrzeug 2a in die Radarkeule 4a ausgeschlossen, damit ein Mittelwert der restlichen Werte einem Geschwindigkeitswert exakt im mittleren Antennenstrahl unter Winkel α1 entspricht. Ein Mittelwert aller Geschwindigkeitsdaten in der Radarkeule 4a ist als Messwert unter einem effektiven Messwinkel zu sehen, der zumeist vom tatsächlichen Antennenmittel unter Winkel α1 abweicht.

Anschließend wird die Referenzgeschwindigkeit, aus der Berechnung nach Durchfahrt von Fahrzeug 2a durch Radarkeule 3a mit dem Geschwindigkeitswert in der Radarkeule 4a in Relation gesetzt und mittels Winkelfunktionen der Messwinkel α1 berechnet. Danach können durch den ermittelten Messwinkel α1 die zwischengespeicherten Radarmesswerte im Bereich der Radarkeule 4a in der Auswerteeinheit 8a analysiert werden und für das Fahrzeug 2a die charakteristischen Einzeldaten wie Richtung, Geschwindigkeit, Fahrzeuglänge, Sicherheitsabstand zum vorausfahrenden Fahrzeug und Fahrzeugart bzw. Fahrzeugklasse ermittelt und gespeichert werden.

Der Messwinkel α1 kann für die weitere Steigerung der Genauigkeit des erfindungsgemäßen Verfahrens aus mehreren Fahrzeugen gemittelt werden.

Bei Fahrzeugen in abgehender Richtung werden zuerst die Radarsignaldaten aus Radarkeule 4a zwischengespeichert und erst dann die Referenzgeschwindigkeit in Keule 3a ermittelt. Außer dass Beschleunigungen oder Verzögerungen umgekehrt kompensiert werden müssen bzw. die Ausfahrt aus der Radarkeule 4a für die Mittelwertbildung der Geschwindigkeit statt der Einfahrt entfernt werden muss, ist der Ablauf gleich.

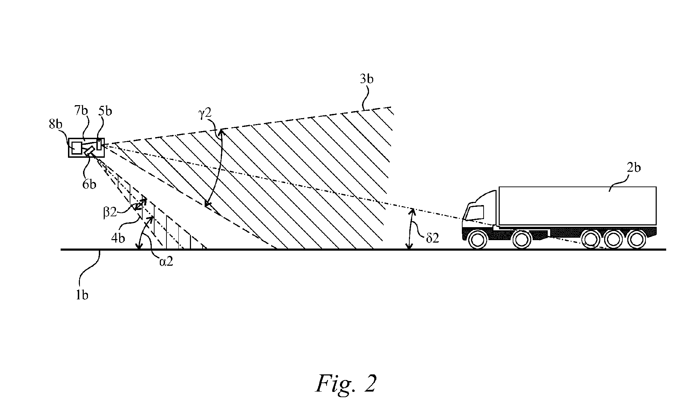

In Fig. 2 und der Messanordnung oberhalb der Straße ermittelt die Auswerteeinheit 8b aus den Signalen von Radarsensor 5b die Referenzwerte für die Geschwindigkeit von Fahrzeug 2b in der Annäherung in Radarkeule 3b gleich wie in Fig. 1 für Fahrzeug 2a beschrieben. Auch der Ablauf der Messung in der Radarkeule 4b bis zur Speicherung der Daten in der Auswerteeinheit 8b ist gleich wie für die eben beschriebene Fig. 1.

### Bezugszeichenliste

- 1a,b: - Fahrbahn
- 2a,b: - Fahrzeug
- 3a,b: - Radarkeule von Radarsensor 5a bzw. 5b
- 4a,b: - Radarkeule von Radarsensor 6a bzw. 6b
- 5a,b: - Radarsensor mit beliebigem Antennenöffnungswinkel γ1 bzw. γ2
- 6a,b: - Radarsensor mit niedrigem Antennenöffnungswinkel β1 bzw. β2
- 7a,b: - Radar-Verkehrserfassungsgerät
- 8a,b: - Auswerteeinheit
- α1,2: - Messwinkel des Radarsensors 6a bzw. 6b
- β1,2: - Antennenöffnungswinkel von Radarsensor 6a bzw. 6b
- γ1,2: - Antennenöffnungswinkel von Radarsensor 5a bzw. 5b
- δ1,2: - Messwinkel des Radarsensors 5a bzw. 5b

## Patentansprüche

1. Verfahren zur Verkehrserfassung, bei dem in einer Auswerteeinheit (8a, 8b) aus den Signalen eines Radarsensors (6a, 6b) mit einem kleinen Antennenöffnungswinkel (β1, β2) bei der Durchfahrt eines Fahrzeuges (2a, 2b) durch die vom Radarsensor (6a, 6b) erste Radarkeule (4a, 4b) Daten wie Richtung, Geschwindigkeit, Fahrzeuglänge, Sicherheitsabstand und Fahrzeugart bzw. Fahrzeugklasse gemessen oder diese Daten aus Radarmesswerten abgeleitet werden, derart ausgestaltet,
- dass in der Auswerteeinheit (8a, 8b) aus den Signalen eines zusätzlichen Radarsensors (5a, 5b) die Geschwindigkeiten der Fahrzeuge als Referenzwerte gemessen oder aus den Radarmesswerten des zusätzlichen Radarsensors (5a, 5b) abgeleitet werden, wobei der zusätzliche Radarsensor (5a, 5b) entgegen der Fahrtrichtung der Fahrzeuge auf der dem Radar-Verkehrserfassungsgerät (7a, 7b) nächst gelegenen Fahrspur gerichtet ist und damit durch einen kleinen Messwinkel (δ1, δ2) kein maßgeblicher Messwinkelfehler für die Dopplermessung gegeben ist, **dadurch gekennzeichnet,**
- **dass** bereits nach grober Ausrichtung des Radar-Verkehrserfassungsgerätes (7a, 7b) bei der Montage, nach Durchfahrt eines Fahrzeuges (2a, 2b) dessen Geschwindigkeitswerte in den sich nicht überschneidenden ersten und zusätzlichen Radarkeulen (3a und 4a, bzw. 3b und 4b) des zusätzlichen Radarsensors (5a, 5b) und des Radarsensors (6a, 6b) mit dem kleinen Antennenöffnungswinkel (β1, β2) ermittelt werden,
- **dass** aus diesen ermittelten Geschwindigkeitswerten ein Messwinkel (α1, α2) für den Radarsensor (6a, 6b) mit dem kleinen Antennenöffnungswinkel (β1, β2) errechnet und aus diesem errechneten Messwinkel (α1, α2), sowie den Messdaten des zugehörigen Radarsensors (6a, 6b) mit dem kleinen Antennenöffnungswinkel (β1, β2) Fahrzeugdaten wie Richtung, Geschwindigkeit, Fahrzeuglänge, Sicherheitsabstand und Fahrzeugart bzw. Fahrzeugklasse ermittelt werden.

2. Verfahren nach Anspruch 1, **dadurch gekennzeichnet, dass** die Radarsensoren mit Frequency-Shift Keying (FSK) Modulation betrieben werden und damit auch die Entfernung bzw. der Entfernungsverlauf berücksichtigt wird, sodaß in die Referenzwerte des Radarsensors (5a, 5b) auch die Beschleunigung oder Verzögerung eines Fahrzeuges (2a, 2b) zwischen den beiden Radarkeulen (3a und 4a, bzw. 3b und 4b) einfließt und damit die Messwinkelermittlung für den Radarsensor (6a, 6b) verbessert wird.

3. Verfahren nach einem der vorstehenden Ansprüche, **dadurch gekennzeichnet, dass** durch einen weiteren Radarsensor, der in Fahrtrichtung der Fahrzeuge auf der dem Radar-Verkehrserfassungsgerät (7a, 7b) nächst gelegenen Fahrspur gerichtet ist, jedes Fahrzeug sowohl in der Annäherung an das Radar-Verkehrserfassungsgerät (7a, 7b), wie auch in abgehender Richtung erfasst wird und damit durch Mittelwertbildung der Referenzgeschwindigkeiten bzw. Angleichung der Beschleunigung oder Verzögerung die Messwinkelermittlung für den Radarsensor (6a, 6b) verbessert wird.

4. Verfahren nach einem der vorstehenden Ansprüche, **dadurch gekennzeichnet, dass** nach der Durchfahrt mehrerer Fahrzeuge die jeweils ermittelten Messwinkel (α1, α2) gemittelt werden und damit die Genauigkeit des Verfahrens erhöht wird.

5. Vorrichtung zur Verkehrserfassung (7a, 7b) mit einer Auswerteeinheit (8a, 8b) zur Ermittlung von Fahrzeugdaten wie Richtung, Geschwindigkeit, Fahrzeuglänge, Sicherheitsabstand und Fahrzeugart bzw. Fahrzeugklasse mittels Dopplermessung und einem Radarsensor (6a, 6b) mit einem kleinen Antennenöffnungswinkel (β1, β2), dessen erste abgestrahlte Radarkeule (4a, 4b) unter dem für die Messdurchführung kritischen Messwinkel (α1, α2) schräg zur Fahrtrichtung eines Fahrzeuges (2a, 2b) gerichtet ist und dessen Radarsignale, nachdem sie von einem Fahrzeug (2a, 2b) reflektiert wurden, von der angeschlossenen Auswerteeinheit (8a, 8b) verarbeitet werden, **dadurch gekennzeichnet, dass** sie weiterhin einen zusätzlichen Radarsensor (5a, 5b) mit einer sich mit der ersten abgestrahlten Radarkeule (4a, 4b) nicht überschneidenden zusätzlichen abgestrahlten Radareule (3a, 3b) beinhaltet, der unter einem kleinen Messwinkel (δ1, δ2) entgegen der Fahrtrichtung der Fahrzeuge auf der dem Radar-Verkehrserfassungsgerät (7a, 7b) nächst gelegenen Fahrspur gerichtet ist und dessen Radarsignale der angeschlossenen Auswerteeinheit (8a, 8b) zugeführt werden, die die Signale zur Kalibrierung des Messwinkels (α1,α2) des ersten Radarsensors (6a, 6b) mit dem kleinen Antennenöffnungswinkel (β1, β2) verwendet.

6. Vorrichtung nach Anspruch 5, **dadurch gekennzeichnet, dass** ein weiterer Radarsensor vorgesehen ist, damit jedes Fahrzeug sowohl in der Annäherung, wie auch in abgehender Richtung durch eine Radarkeule unter kleinem Messwinkel erfasst wird.

## Claims

1. Method for traffic recording in which, in an evaluation unit (8a, 8b) from the signals of a radar sensor (6a, 6b) with a small antenna aperture angle (β1, β2) during the passage of a vehicle (2a, 2b) through the first radar beam (4a, 4b) of the radar sensor (6a, 6b) data such as direction, speed, vehicle length, vehicle distance and vehicle or measured vehicle class or this data is derived from radar measurements, thus developed
- that in the evaluation unit (8a, 8b) from the signals of an additional radar sensor (5a, 5b) the speeds of the vehicles are measured as reference values or derived from the radar measurement values from the additional radar sensor (5a, 5b), wherein the additional radar sensor (5a, 5b) is oriented on the rearward direction of the vehicle of the radar traffic monitoring device (7a, 7b) nearest lane and thus no significant measurement angle error is given for the Doppler measurement by a small measuring angle (δ1, δ2), **characterized**
- **in that** after coarse alignment of the radar traffic monitoring device (7a, 7b) by assembling after the passage of a vehicle (2a, 2b) whose velocity values are calculated in the first and additional radar beam which don't overlap (3a and 4a, 3b and 4b) of the additional radar sensor (5a, 5b) and the radar sensor (6a, 6b) with the small antenna aperture angle (β1, β2)
- with those determined speed values it is calculated a small measuring angle (α1, α2) for the radar sensor (6a, 6b) with the small antenna aperture angle (β1, β2) and by this calculated measuring angle (β1, β2), as well as by the measurment data of the belonging radar sensor (6a, 6b) with the samll antenna aperture angle (β1, β2) vehichle data such as direction, speed, vehicle length, vehicle distance and vehicle or measured vehicle class.

2. Method according to claim 1, **characterized in that** the radar sensors are operated by frequency shift keying (FSK) modulation and thus also the distance or the distance profile is taken into account, so that in the reference values of the radar sensor (5a, 5b) and the acceleration or deceleration of a vehicle (2a, 2b) flows between the two radar beams (3a and 4a, and 3b and 4b) and thus the measurement angle determination for the radar sensor (6a, 6b) is improved.

3. Method according to one of the preceding claims, **characterized in that** a further radar sensor, which is oriented in the direction of travel of vehicles on the radar traffic monitoring device (7a, 7b) nearest lane, each vehicle both in approaching the radar traffic monitoring device (7a, 7b), as will be also recorded in the outgoing direction, and thus by forming the average of the reference velocities or approximation of acceleration or deceleration of the measuring angle determination for the radar sensor (6a, 6b) is improved.

4. Method according to one of the preceding claims, **characterized in that**, after the passage of several vehicles the determined measured angles (α1, α2) are averaged, and thus the accuracy of the method is increased.

5. Device for traffic monitoring (7a, 7b) to an evaluation unit (8a, 8b) to determine vehicle data such as direction, speed, vehicle length, vehicle distance and vehicle or measured vehicle class with Doppler measurement and a radar sensor (6a, 6b) with a small antenna aperture angle (β1, β2) whose first radiated radar lobe (4a, 4b) is directed under the critical measuring angle (α1, α2) for the measuring operation in an diagonal angle towards the driving direction and whose radar signals, after beeing reflected by a vehicle, are processed from the connected evaluation unit (8a, 8b), **characterized in that** it further comprises an additional radar sensor (5a, 5b) with an additional radiated radar lobe (3a, 3b) which does not overlap with the first radiated radar lobe (4a, 4b), which is oriented under a small measuring angle (δ1, δ2) which is oriented rearwards of travel of vehicles on the radar traffic monitoring device (7a, 7b) nearest lane and whose radar signals are supplied to the connected evaluation unit (8a, 8b), which uses the signals for the calibration of the measuring angle (α1, α2) of the first radar sensor (6a, 6b) with the small antenna aperture angle (β1, β2).

6. Apparatus according to claim 5, **characterized in that** a further radar sensor is provided, so that each vehicle is detected in both of approach, as well as in outbound direction by a radar beam at a small measuring angle.

## Revendications

1. Procédé pour l'enregistrement de la circulation dans lequel, dans une unité d'évaluation (8a, 8b) à partir des signaux d'un capteur radar (6a, 6b) avec un petit angle d'ouverture de l'antenne (β1, β2) lors du passage d'un véhicule (2a, 2b) par le premier lobe radar du faisceau radar (4a, 4b) des données telles que la direction, la vitesse, la longueur du véhicule, la distance du véhicule et le véhicule ou classe de véhicule mesurée ou ces données sont tirées des mesures radar, conçu de telle sorte
- que dans l'unité d'évaluation (8a, 8b) à partir des signaux d'un capteur radar supplémentaire (5a, 5b) les vitesses des véhicules sont mesurées comme valeurs de référence ou dérivées des valeurs de mesure du premier faisceau radar (5a, 5b) le capteur radar supplémantaire (5a, 5b) étant adressé sur la voie la plus proche sur la direction vers l'arrière du véhicule du dispositif de suivi du trafic des radar (7a, 7b) et donc aucune erreur significative de l'angle de mesure est donnée pour la mesure Doppler par un petit angle de mesure (δ1, δ2), **caractérisé,**
- **en ce que**, après l'alignement grossier du dispositif de surveillance du trafic de radar (7a, 7b) pendant le montage, après le passage d'un véhicule (2a, 2b) dont les valeurs de vitésse sont dérivées dans le premier lobe radar et le lobe radar supplémentaire (3a et 4a, 3b et 4b) qui se ne recoupent pas du faisceau radar supplémentaire (5a, 5b) et du capteur radar (6a, 6b) avec le petit angle d'ouverture d'antenne (β1, β2)
- **en ce que** du ces valeurs dérivées est calculé un angle de mesure (α1, α2) pour le capteur radar (6a, 6b) avec un petit angle d'ouverture de l'antenne (β1, β2) et de ce angle de mesure calculé (α1,α2) et des données de mesure qui vont avec le capteur radar (6a, 6b) avec le petit angle d'ouverure de l'antenne (β1, β2) des données de véhicules telles que la direction, la vitesse, la longueur du véhicule, la distance du véhicule et le véhicule ou classe de véhicule sont calculées.

2. Procédé selon la revendication 1, **caractérisé en ce que** les capteurs radar sont actionnés par le Frequency-Shift Keying (FSK) modulation et donc aussi la distance ou le profil de distance est prise en compte, de sorte que les valeurs de référence du capteur radar (5a, 5b) aussi l'accélération ou la décélération d'un véhicule (2a, 2b) se écoule entre les deux faisceaux radar (3a et 4a, et 4b et 3b) et donc la détermination de l'angle de mesure du capteur radar (6a, 6b) est améliorée.

3. Procédé selon l'une des revendications précédentes, **caractérisé en ce que** par un capteur de radar supplementaire qui est orienté sur la voie la plus proche dans le sens de voyage des véhicules sur le dispositif de surveillance de la circulation radar (7a, 7b), chaque véhicule à la fois en se approchant du dispositif de surveillance de trafic radar (7a, 7b), comme cela sera également enregistré dans le sens sortant, et donc par la formation de la moyenne des vitesses de référence ou rapprochement de l'accélération ou de la décélération de la détermination de l'angle de mesure pour le capteur radar (6a, 6b) est améliorée.

4. Procédé selon l'une des revendications précédentes, **caractérisé en ce que**, après le passage de plusieurs véhicules les angles mesurés (α1, α2) sont moyennés, et donc la précision de la méthode est augmentée.

5. Dispositif de surveillance du trafic (7a, 7b) à une unité d'évaluation (8a, 8b) pour calculer des données de véhicules telles que la direction, la vitesse, la longueur du véhicule, la distance du véhicule et le véhicule ou classe de véhicule avec la mesure Doppler et un capteur radar (6a, 6b) avec un petit angle d'ouverture de l'antenne (β1, β2) dont le premier lobe de radar (4a, 4b) sous l'angle de mesure critique (α1, α2) pour l'application de mesure en biasi dans le sens de la marche d'un vehicule (2a, 2b) et dont les signaux, ont été réfléchis par un véhicule, à partir de l'unité d'évaluation connectée (8a , 8b) devant être traitée, **caractérisé en ce qu'**il comprend en outre un capteur radar supplémentaire (5a, 5b) avec le premier lobe radar (4a, 4b) qui se ne recoupe pas avec un lobe radar supplémentaire (3a,3b), qui et sous un petit angle de mesure (δ1, δ2) est orienté sur la voie la plus proche dans le sens opposé du voyage des véhicules sur le dispositif de surveillance de la circulation radar (7a, 7b) et dont les signaux radar de l'unité d'évaluation (8a, 8b) sont délivrés, qui utilisent les signaux pour l'étalonnage de l'angle de mesure (α1, α2) du premier capteur radar (6a, 6b) avec l'angle d'ouverture de l'antenne (β1, β2).

6. Appareil selon la revendication 5, **caractérisé en ce qu'**un capteur radar supplémentaire est prévu, de sorte que chaque véhicule est détectée à la fois dans de l'approche, ainsi que dans le sens sortant par un faisceau radar à un petit angle de mesure.
